# EUROPÄISCHE PATENTANMELDUNG

(11) **EP 1 059 467 A1**
(43) Veröffentlichungstag der Anmeldung: **13.12.2000**
(21) Anmeldenummer: 00250161.7
(22) Anmeldetag: 24.05.2000
(51) Int. Cl.: F16G 13/18

(54) **Rückensteife Kette**

(30) Priorität: 08.06.1999 DE 29910380 U
(71) Anmelder: Arnold & Stolzenberg GmbH, 37557 Einbeck (DE)
(72) Erfinder: Ragnitz, Detlef, 37586 Dassel Markoldendorf (DE)
(74) Vertreter: Pfenning, Meinig & Partner GbR

(57) **Zusammenfassung**

Bei einer rückensteifen Kette mit Innen- (2) und Außenlaschen (1) sind jeweils mindestens zwei Innenlaschen durch zwei starr miteinander gekoppelte Außenlaschen und jeweils zwei starr miteinander gekoppelte Außenlaschen durch mindestens eine Innenlasche mit zwei benachbarten starr miteinander gekoppelten Außenlaschen gelenkig verbunden. Die einander zugewandten Außenkanten zweier benachbarter, über mindestens eine Innenlasche verbundener Außenlaschen sind mindestens abschnittsweise derart komplementär zueinander ausgebildet, daß sie bei einer Druckbelastung der Kette in ihren komplementären Abschnitten unmittelbar aneinander liegen und eine Schwenkbarkeit zwischen Innen- und Außenlaschen in der einen Richtung verhindern. Weiterhin besitzt jede Außenlasche zwei senkrecht nach außen abstehende Bolzen (3), über welche der Antrieb der Kette erfolgt.

## Beschreibung

Die Erfindung betrifft eine rückensteife Kette nach dem Oberbegriff des Anspruchs 1.

Aus der DE 33 15 779 A1 ist eine drucksteite Laschenkette mit jeweils paarweise und gegenüber liegenden, in abwechselnder Folge angeordneten Außenlaschen gleicher Länge und Innenlaschen gleicher Länge bekannt, wobei jedes Paar an ihrem einen Ende mit einem ersten Gelenkbolzen und an ihrem anderen Ende durch einen zweiten Gelenkbolzen miteinander verbunden sind und zusätzlich Riegelbolzen vorhanden sind, die parallel zu den Gelenkbolzen verlaufen und durch ihre axiale Verschiebung die Außenlaschen mit den Innenlaschen und einem Abstand zu den Gelenkbolzen verriegeln und damit die Kette drucksteif machen.

Weiterhin offenbart die DE 41 24 281 A1 eine Druck/Zug-Kette mit einem Verriegelungsmechanismus, der zwischen Innen- und Außengliedern angeordnet ist, die über Gelenkstifte miteinander verbunden sind. Der Verriegelungsmechanismus verhindert eine relative Schwenkbewegung zwischen den Innen- und Außengliedern. Ein Verriegelungsstift kann parallel zu den Gelenkstiften bewegt werden, wobei er ein Innenglied mit einem Außenglied verbindet und damit eine relative Schwenkbewegung verhindert.

Die beiden genannten druck- bzw. rückensteifen Ketten sind durch die Verwendung eines Verriegelungsmechanismus jedoch sehr aufwendig.

Es ist daher die Aufgabe der vorliegenden Erfindung, eine rückensteife Kette mit Innen- und Außenlaschen, bei der jeweils mindestens zwei Innenlaschen durch zwei starr miteinander gekoppelte Außenlaschen und jeweils zwei starr miteinander gekoppelte Außenlaschen durch mindestens eine Innenlasche mit zwei benachbarten starr miteinander gekoppelten Außenlaschen gelenkig verbunden sind, zu schaffen, die sehr einfach ausgebildet und daher kostengünstig herstellbar ist, und die weniger störanfällig ist.

Diese Aufgabe wird erfindungsgemäß gelöst durch die im kennzeichnenden Teil des Anspruchs 1 angegebenen Merkmale. Vorteilhafte Weiterbildungen der erfindungsgemäßen Kette ergeben sich aus den Unteransprüchen.

Dadurch, daß die einander zugewandten Außenkanten zweiter benachbarter, über mindestens eine Innenlasche verbundenen Außenlaschen mindestens abschnittsweise komplementär zueinander ausgebildet sind, derart, daß sie bei einer Druckbelastung der Kette in ihren komplementären Abschnitten unmittelbar aneinander liegen und eine Schwenkbarkeit zwischen Innen- und Außenlaschen in der einen Richtung verhindern, wird die Rückensteifigkeit der Kette allein durch die spezielle Gestaltung der Außenlaschen bewirkt, so daß ein besonderer Mechanismus mit bewegbaren Verriegelungsstiften nicht erforderlich ist. Hierdurch vereinfacht sich die Ausbildung der Kette erheblich, so daß auch weniger störungsbedingte Ausfälle zu erwarten sind.

Jede Außenlasche ist weiterhin mit zwei senkrecht nach außen abstehenden Bolzen versehen, über welche der Antrieb der Kette erfolgt. Dies kann den Kettenantrieb vereinfachen, bei dem bisher der Eingriff zwischen den Außenlaschen vorgenommen wurde.

Die Bolzen können gleichzeitig dazu verwendet werden, jeweils die beiden starr miteinander gekoppelten Außenlaschen zu tragen und in vorgegebenem Abstand voneinander zu fixieren. Zusätzlich können die Bolzen an den einander zugewandten Enden von je einem Paar aus zwei starr miteinander gekoppelten Außenlaschen durch mindestens eine Innenlasche verbunden sein. Durch diese Mehrfachfunktion der Bolzen ergibt sich eine in ihrem Aufbau sehr einfache Kette.

Um die Rückensteifigkeit der Kette zu erhöhen, können auch die einander zugewandten Außenkanten zweier benachbarter, über zwei starr miteinander gekoppelte Außenlaschen verbundener Innenlaschen mindestens abschnittsweise komplementär zueinander ausgebildet sein, derart, daß sie bei einer Druckbelastung der Kette in ihren komplementären Abschnitten unmittelbar aneinander liegen.

Gemäß einer besonders vorteilhaften Ausbildung der Kette ist der Abstand zwischen den jeweils starr miteinander gekoppelten Außenlaschen so gewählt, daß die Innenlaschen mit Spiel zwischen diesen angeordnet sind, derart, daß die Kette in einer Ebene senkrecht zu den Ebenen der Außenlaschen im Bogen führbar ist. Bei Verwendung einer rückensteifen Kette, beispielsweise bei einem Fensterhebemechanismus wurde bisher verlangt, daß der Antrieb sowie die Anbindung des Fensters gelenkig gelagert sind, da das Fenster in einem Winkel um das Gelenk schwenkt. Durch das Vorsehen eines entsprechend großen Spiels zwischen den Innen- und Außenlaschen kann die Führung der Kette in einem erheblichen Seitenbogen erfolgen, was die gelenkige Lagerung des Antriebs sowie der Fensteranbindung entbehrlich macht. Hierdurch kann eine wesentliche Vereinfachung des Fensterhebemechanismus erzielt werden.

Die Erfindung wird im Folgenden anhand eines in den Figuren dargestellten Ausführungsbeispiels näher erläutert.

Es zeigen:
- Fig. 1: die Seitenansicht, teilweise im Schnitt, eines Teils einer rückensteifen Kette,
- Fig. 2: die Kette nach Fig. 1 in der Draufsicht bei gerader Führung, und
- Fig. 3: die Kette nach Fig. 1 in der Draufsicht bei Führung in einem Seitenbogen.

Die in den Figuren wiedergegebene Kette besteht aus Außenlaschen 1, Innenlaschen 2 und Bolzen 3. Jeweils zwei Bolzen 3 sind mit zwei Außenlaschen 1 fest verbunden, so daß diese Außenlaschen 1 starr miteinander gekoppelt sind und in einem vorgegebenen festen Abstand parallel zueinander verlaufen.

Jede Innenlasche 2 weist zwei Bohrungen auf, durch die jeweils einer der Bolzen 3 hindurchgeht. Die Innenlaschen 2 sind in Längsrichtung der Bolzen 3 zwischen zwei Außenlaschen 1 sowie in Längsrichtung der Kette so zwischen zwei Paaren aus jeweils zwei starr gekoppelten Außenlaschen 1 angeordnet, daß sie von den beiden Bolzen 3, welche die beiden starr gekoppelten Außenlaschen 1 an den einander zugewandten Enden zweier benachbarter Paare von Außenlaschen 1 verbinden, getragen werden. Die einzelnen Innenlaschen 2 stellen somit eine Verbindung zwischen jeweils zwei Außenlaschen-Paaren und die einzelnen Außenlaschen-Paare eine Verbindung zwischen jeweils zwei Innenlaschen 2 her, so daß eine durchgehende Kette gebildet ist. Die Innenlaschen 2 sind drehbar auf den Bolzen 3 gelagert, so daß die Kette gelenkig ist. Zwischen den Bolzen 3 und den Außenkanten der Bohrungen der Innenlaschen 2 besteht vorzugsweise etwas Spiel, so daß je nachdem in welcher Richtung Kräfte auf die Kette einwirken, die einander zugewandten Kanten der Außenlaschen 1 zweier benachbarter Paare entweder aneinander anliegen oder einen schmalen Spalt zwischen sich aufweisen. Dies erhöht die Gelenkigkeit der Kette, insbesondere deren Wickelbarkeit in der einen Richtung.

Die einander zugewandten Kanten der Außenlaschen 1 zweier benachbarter Paare weisen in einem sich über die Hälfte der Kantenlänge erstreckenden Abschnitt einander komplementäre Konturen auf, so daß bei einer Druckausübung auf die Kette in ihrer Längsrichtung die Kanten der Außenlaschen 1 in diesem Abschnitt direkt aneinander liegen und der Druck somit über die Kette übertragen werden kann. Der Kantenverlauf in diesem Abschnitt ist derart, daß eine Verschiebung der Kettenlaschen unter der Druckspannung und damit ein Nachgeben der nicht möglich ist.

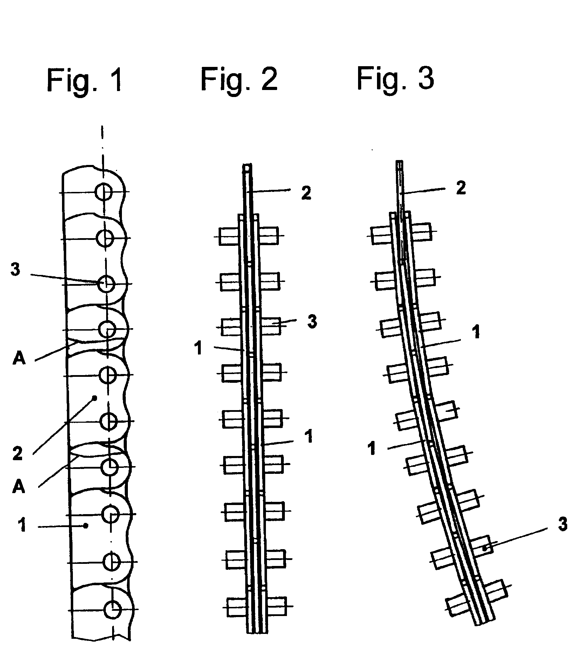

Der Kantenverlauf der Innenlaschen 2 kann an sich beliebig sein. Jedoch können auch diese zur Erhöhung der Drucksteifigkeit und der Stabilisierung der Kette im Druckzustand so ausgebildet sein, daß die einander zugewandten Kanten zweier benachbarter, durch ein Paar von starr miteinander gekoppelten Außenlaschen 1 verbundener Innenlaschen 2 ebenfalls abschnittsweise komplementär zueinander verlaufen, so daß sie bei einer Druckbelastung der Kette in diesem Abschnitt unmittelbar aufeinander liegen. Dies ist in Fig. 1 dargestellt (der zwischen den beiden Bruchkanten A liegende Bereich zeigt die Innenlaschen 2, da hier die vordere Außenlasche 1 entfernt ist).

Die Bolzen 3 ragen jeweils seitlich über die Außenlaschen 1 hinaus. Eine Antriebsvorrichtung kann daher an den vorstehenden Bolzenenden angreifen und eine Zug- oder Druckkraft auf die Kette ausüben.

Fig. 2 zeigt die gerade geführte Kette. Die Innenlaschen 2 besitzen ein seitliches Spiel zwischen den Außenlaschen (in Fig. 2 schwarz markiert), das jedoch bei einer Geradführung nicht ausgenutzt wird. Für manche Anwendungen, beispielsweise bei einem Fensterhebemechanismus, ist es jedoch vorteilhaft, daß die Kette auch senkrecht zu den Außenlaschen im Bogen (Seitenbogen) führbar ist. Dies ist unter Ausnutzung des Spiels zwischen den Innenlaschen 2 und Außenlaschen 2 möglich, wie in Fig. 3 gezeigt ist. Das erforderliche Spiel ist nach der geforderten maximalen Krümmung des Seitenbogens einzustellen.

## Patentansprüche

1. Rückensteife Kette mit Innen- (2) und Außenlaschen (1), bei der jeweils mindestens zwei Innenlaschen (2) durch zwei starr miteinander gekoppelte Außenlaschen (1) und jeweils zwei starr miteinander gekoppelte Außenlaschen (1) durch mindestens eine Innenlasche (2) mit zwei benachbarten starr miteinander gekoppelten Außenlaschen (1) gelenkig verbunden sind,
**dadurch gekennzeichnet,**
daß die einander zugewandten Außenkanten zweier benachbarter, über mindestens eine Innenlasche (2) verbundene Außenlaschen (1) mindestens abschnittsweise komplementär zueinander ausgebildet sind, derart, daß sie bei einer Druckbelastung der Kette in ihren komplementären Abschnitten unmittelbar aneinander liegen und eine Schwenkbarkeit zwischen Innen- (2) und Außenlaschen (1) in der einen Richtung verhindern, und daß jede Außenlasche (1) zwei senkrecht nach außen abstehende Bolzen (3) besitzt, über welche der Antrieb der Kette erfolgt.

2. Kette nach Anspruch 1, dadurch gekennzeichnet, daß die Bolzen (3) jeweils die beiden starr miteinander gekoppelten Außenlaschen (1) tragen und diese in vorgegebenem Abstand voneinander fixieren.

3. Kette nach Anspruch 1 oder 2, dadurch gekennzeichnet, daß die beiden Bolzen (3) an den einander zugewandten Enden von je einem Paar aus zwei starr miteinander gekoppelten Außenlaschen (1) durch mindestens eine Innenlasche (2) verbunden sind.

4. Kette nach einem der Ansprüche 1 bis 3, dadurch gekennzeichnet, daß die einander zugewandten Außenkanten zweier benachbarter, über zwei starr miteinander gekoppelte Außenlaschen (1) verbundene Innenlaschen (2) mindestens abschnittsweise komplementär zueinander ausgebildet sind, derart, daß sie bei einer Druckbelastung der Kette in ihren komplementären Abschnitten unmittelbar aneinander liegen.

5. Kette nach einem der Ansprüche 1 bis 4, dadurch gekennzeichnet, daß der Abstand zwischen den jeweils starr miteinander gekoppelten Außenlaschen (1) so gewählt ist, daß die Innenlaschen (2) mit Spiel zwischen diesen angeordnet sind, derart, daß die Kette in einer Ebene senkrecht zu den Ebenen der Außenlaschen (1) im Bogen führbar ist.

6. Kette nach einem der Ansprüche 1 bis 5, dadurch gekennzeichnet, daß die Innen- (2) und Außenlaschen (1) gelenkig miteinander verbunden sind, derart, daß die Kette in einer Richtung aufwickelbar.

7. Kette nach einem der Ansprüche 1 bis 6, dadurch gekennzeichnet, daß die Innen- (2) und Außenlaschen (1) mit Spiel in Längsrichtung der Kette miteinander verbunden sind.
